# EUROPÄISCHE PATENTSCHRIFT

(11) **EP 2 142 557 B1**
(45) Veröffentlichungstag und Bekanntmachung des Hinweises auf die Patenterteilung: **05.09.2012**
(21) Anmeldenummer: 08734908.0
(22) Anmeldetag: 31.03.2008
(51) Int. Cl.: C07F 7/12, C07F 7/08

(54) **PLASMAUNTERSTÜTZTE ORGANOFUNKTIONALISIERUNG VON SILICIUMTETRAHALOGENIDEN ODER VON ORGANOHALOGENSILANEN**
PLASMA-ASSISTED ORGANOFUNCTIONALIZATION OF SILICON TETRAHALIDES OR ORGANOHALOSILANES
ORGANOFONCTIONNALISATION ASSISTÉE PAR PLASMA DE TÉTRAHALOGÉNURES DE SILICIUM OU D'ORGANOHALOGÉNOSILANES

(30) Priorität: 30.03.2007 DE 102007015749
(43) Veröffentlichungstag der Anmeldung: 13.01.2010
(73) Patentinhaber: Spawnt Private S.à.r.l., 1148 Luxembourg (LU)
(72) Erfinder: AUNER, Norbert, 61479 Glashütten (DE); BAUCH, Christian, 61250 Usingen (DE); DELTSCHEW, Rumen, 04319 Leipzig (DE); LIPPOLD, Gerd, 04416 Markkleeberg (DE); MOHSSENI-ALA, Dr. Seyed-Javad, 06766 Bitterfeld-Wolfen (DE)
(74) Vertreter: Epping - Hermann - Fischer
(86) Internationale Anmeldenummer: PCT/EP2008/002551
(87) Internationale Veröffentlichungsnummer: WO 2008/119540

(56) Entgegenhaltungen:
- WO-A-2004/010454
- DE-C1- 3 941 997
- SCHMIDBAUR, HUBERT ET AL: "Synthesewege zu einfachen Di- und Trisilylmethanen: potentielle Ausgangsstoffe für die CVD Abscheidung von amorphem alpha SiC:H" ZEITSCHRIFT FUER NATURFORSCHUNG, TEIL B: ANORGANISCHE CHEMIE, ORGANISCHE CHEMIE , 41B(12), 1527-34 CODEN: ZNBAD2; ISSN: 0340-5087, 1986, XP009102866
- FRITZ ET AL.: "Gewinnung ringförmiger chlorierter Siliciummethylen-Verbindungen (Cyclocarbosilane) aus CH3SiCl3, (CH3)2SiCl2 und (CH3)3SiCl" ZEITSCHRIFT FÜR ANORGANISCHE UND ALLGEMEINE CHEMIE, Bd. 302, 1959, Seiten 60-80, XP002487499
- DATABASE BEILSTEIN [Online] BEILSTEIN INSTITUTE FOR ORGANIC CHEMISTRY, FRANKFURT-MAIN, DE; XP002487500 gefunden im XFIRE Database accession no. RID 130151 -& ANDREEW: IZVESTIYA AKADEMII NAK SSSR SERIA KHIMICHESKAYA (ENGL TRANSL.), 1957, Seiten 839-842, XP009102905

## Beschreibung

Die vorliegende Erfindung betrifft ein Verfahren zur plasmaunterstützten Synthese von Organohalogensilanen.

Der Stand der Technik ist dadurch charakterisiert, dass Dimethyldichlorsilan nach dem so genannten Müller-Rochow-Prozess aus Silizium und Methylchlorid (Gas) bei 270 - 350° C gewonnen wird. Hierzu wird qualitativ hochwertiges metallurgisches Silizium benötigt, welches noch mit Katalysatoren (Cu) und genauen Mengen Promotoren (verschiedene Metalle in geringen Mengen) versetzt werden muss. Nachteilig ist, dass mit relativ teurem metallurgischem Silizium und teurem und giftigen (krebserregendem) Methylchlorid gearbeitet werden muss. Neben dem erwünschten Me₂SiCl₂ entstehen noch in wechselnden Mengen andere Silane wie MeSiCl₃, Me₃SiCl, Me₄Si und SiCl₄ sowie höhersiedende Oligosilane.

Solarzellen aus einkristallinem Silicium verfügen über einen hohen Wirkungsgrad, sind aber in der Herstellung teuer. Kostengünstiger sind zwar Schichten aus amorphem Silicium (a-Si), jedoch ist es für seine Verwendung vorteilhaft, in eine hydrierte amorphe Silicium-Schicht (a-Si:H) Kohlenstoff einzubauen (a-SiCₓ:H), da dadurch der wirksame Wellenlängenbereich des Sonnenlichtes erheblich vergrößert wird.

a-SiCₓ:H wird im Allgemeinen durch chemisches Abscheiden aus der Gasphase (z.B. Plasma-CVD) von Gasgemischen aus Silan, Kohlenwasserstoffen und Wasserstoff erhalten. Die Elemente Si, C und H werden nach einem solchen Verfahren jedoch in einer nicht hinreichend exakt kontrollierbaren Weise abgeschieden, so dass unerwünschte chemische Bindungen ausgebildet werden können, die den Wirkungsgrad herabsetzen. Zur Vermeidung dieses Effektes werden anstelle von Gasgemischen Alkylsilane zur Herstellung von a-SiCₓ:H-Schichten verwendet. Da Methylsilan in der thermischen sowie auch der Plasma-Abscheidung zu Schichten mit einem relativ niedrigen Si-Gehalt bzw. hohem C-Gehalt und damit zu einem hohen elektrischen Widerstand führt, werden nach dem Stand der Technik silyl-reichere Verbindungen eingesetzt, so z.B.
Bis(silyl)methan, H₃SiCH₂SiH₃ (vgl. US-PS 4690830, EP-A-0233613). Die Herstellung dieser Verbindung erfolgt nach dem Stand der Technik durch Umsetzung von Chloroform mit Trichlorsilan (HSiCl₃) in Gegenwart eines Amins zu H₂C(SiCl₃)₂, das mit Lithiumaluminiumhydrid (LiAlH4) zu Bis(silyl)methan reduziert wird. Ein anderer Herstellungsweg geht von einer Umsetzung von Dibrommethan mit KSiH₃ aus [vgl. Z. Naturforsch. 41b, S. 1527-1534 (1986)]. In DE 3941997 Cl wird über eine dreistufige Synthese berichtet.

CH₂X₂ + 2 PhSiH₂X + 2 Mg → CH₂(SiH₂Ph)₂ + 2 MgX₂

CH₂(SiH₂Ph)₂ + 2 HBr → CH-₂(SiH₂Br)₂ + 2 PhH

2CH₂(SiH₂Br)₂ + LiAlH₄ → 2 CH₂(SiH₃)₂ + AlBr₃ + LiBr

Die WO 2004/010454 A2 befasst sich mit der Durchführung von Gasreaktionen in einem gasdurchströmten Plasmareaktor, dessen strömungsformende Elemente so angeordnet sind, dass sich im Plasmareaktor wenigstens eine strömungsberuhigte Zone im Gasstrom ausbildet. Als Reaktionsgase werden die schwer aktivierbaren und damit wenig reaktiven Gase Kohlendioxid, Wasser, Stickstoff, Methan und Erdgas verwendet. Beispielsweise kann mit einer Leistung von P = 4500 W Synthesegas aus CO₂ und CH₄ hergestellt werden.

Geeignete Ausgangsverbindungen zur Darstellung von Disilylmethan sind weiterhin perhalogenierte Bis(silyl)methane vom Typ (X₃Si)₂CH₂, wobei X im günstigsten Falle Chlor ist. Jedoch ist bis dato keine Synthese bekannt, (Cl₃Si)₂CH₂ aus den einfach zugänglichen und damit kostengünstigsten Bausteinen Siliciumtetrachlorid und Methan aufzubauen.

Der Erfindung liegt die Aufgabe zugrunde, ein besonders einfaches und kostengünstiges Verfahren zur plasmaunterstützten Synthese von Organohalogensilanen zur Verfügung zu stellen.

Diese Aufgabe wird erfindungsgemäß durch ein Verfahren gelöst, das dadurch gekennzeichnet ist, dass durch Zündung eines Plasmas in einem Gemisch aus einer oder mehreren flüchtigen organischen Verbindungen aus der Gruppe der Alkane, Alkene, Alkine und Aromaten mit SiX₄ und/oder Organohalogensilanen RₙSiX₄₋ₙ (X=F, Cl, Br oder I; n=1-4; R = Alkyl, Alkenyl, Alkinyl, Aryl) Organohalogensilane der allgemeinen Summenformel R¹ₘR²ₒSiX₄₋ₚ (X=F, Cl, Br oder I; p=1-4; p=m+o; m=1-4; o=0-3; R¹, R² = Alkyl, Alkenyl, Alkinyl, Aryl) und/oder Carbosilane der allgemeinen Summenformel R³_{q}SiX_{3-q}CH₂SiR⁴ᵣX₃₋ᵣ (X=F, Cl, Br oder I; q=0-3; r=0-3; R³, R⁴ = Alkyl, Alkeny, Alkinyl, Aryl) gebildet werden.

Weiterbildungen des erfindungsgemäßen Verfahrens sind in den Unteransprüchen be schrieben. So zeichnet sich eine Weiterbildung dadurch aus, dass das Reaktandgemisch durch Anwendung eines nichtisothermen Plasmas zur Reaktion gebracht wird. Ferner wird das Reaktandgemisch vorzugsweise unter vermindertem Druck zur Reaktion gebracht.

Das Reaktandgemisch wird zweckmäßigerweise durch mindestens eine Plasmareaktionszone geleitet. Ferner wird es vorzugsweise durch mehrere Reaktions- und Ruhezonen geleitet, welche abwechselnd aufeinander folgen.

Vorzugsweise wird das Reaktandgemisch in einem Plasmareaktor bei einem Druck von 0,1 bis 100 hPa, vorzugsweise von 1,0 bis 10,0 hPa, umgesetzt. Es wird zweckmäßigerweise bei Reaktionstemperaturen von -80 °C bis +400°C, vorzugsweise von 0 °C bis 250 °C, umgesetzt.

Zur Durchführung der Plasmareaktionen werden speziell elektromagnetische Wechselfelder, vorzugsweise im Bereich 1,0 MHz bis 2,45 GHz, eingekoppelt.

In Weiterbildung werden die Reaktionsprodukte in einem Auffanggefäß nach dem Plasmareaktor durch Tiefkühlkondensation bei etwa -80 °C gewonnen. Vorzugsweise werden die Organohalogensilane aus einem Destillationsgefäß in einer Destillationskolonne durch Destillation erhalten und in einem Auffanggefäß aufgefangen. Reaktor und Auffanggefäß können mit SiX₄ ausgewaschen werden.

Vorzugsweise werden Methan allein oder zusätzlich zu Methan andere flüchtige Verbindungen aus der Gruppe der Aliphaten und/oder Aromaten eingesetzt. Dabei wird speziell zusätzlich zu Methan Ethan, Ethen und/oder Ethin umgesetzt.

Statt oder zusätzlich alkylierter Halogensilane können arylierte Halogensilane erhalten werden, indem statt oder zusätzlich zu Alkanen Aromaten eingesetzt werden. Statt oder zusätzlich alkylierter Halogensilane können alkenylierte Halogensilane erhalten werden, indem statt oder zusätzlich zu Alkanen Alkene eingesetzt werden. Statt oder zusätzlich alkylierter Halogensilane können alkinylierte Halogensilane erhalten werden, indem statt oder zusätzlich zu Alkanen Alkine eingesetzt werden.

Es werden vorzugsweise Organohalogensilane mit unterschiedlichen Organylsubstituenten hergestellt.

Vorzugsweise werden eine oder mehrere flüchtige Verbindungen aus der Gruppe der Halogensilane, insbesondere SiF₄, SiCl₄ und/oder SiBr₄, eingesetzt. Auch können eine oder mehrere flüchtige Verbindungen aus der Gruppe der Organohalogensilane, insbesondere Methyltrichlorsilan, umgesetzt werden. Die flüchtigen Verbindungen, vorzugsweise der Form MeSiX₃, können durch eine Destillation der im Auffanggefäß aufgefangenen Organohalogensilane gewonnen werden.

Bei einer weiteren Ausführungsform wird zusätzlich Wasserstoff umgesetzt.

Bei einer anderen Ausführungsform wird zweifach silyliertes Methan (Carbosilan), insbesondere ein Bis(silyl)methan X₃Si-CH₂-SiX₃, hergestellt.

Bei einer anderen Ausführungsform können zusätzlich Bis(silyl)methan H₃Si-CH₂-SiH₃ und/oder ein silylorganyliertes und/oder ein silylhalogeniertes Derivat des Bis(silyl)methans hergestellt werden.

Weiterhin können zusätzlich in dem Ausgangsgemisch ein oder verschiedene Organohalogensilane, insbesondere RₙSiX₄₋ₙ, wobei R insbesondere aus der Gruppe Vinyl und Ethinyl ausgewählt ist, als Edukt enthalten sein.

Bei noch einer anderen Ausführungsform können zusätzlich ein oder verschiedene organosubstituierte Bis(silyl)methane, insbesondere RX₂Si-CH₂-SiX₃ und/oder (RX₂Si)₂CH₂, wobei R insbesondere aus der Gruppe umfassend Vinyl und Ethinyl ausgewählt ist, hergestellt werden.

Das erfindungsgemäße Verfahren umgeht die eingangs genannten Probleme dadurch, dass von preiswertem SiX₄ oder entsprechenden Organohalogensilanen und Methan (ungiftig) oder anderen flüchtigen Verbindungen aus der Gruppe der Alkane, Alkene, Alkine und Aromaten ausgegangen wird. Diese Stoffe werden durch ein Plasma angeregt und zur Reaktion gebracht, wobei unter anderem die erwünschten Silane Me₂SiX₂, MeSiX₃ und (X₃Si)₂CH₂ entstehen. Ein weiterer Vorteil ist, dass durch Ersatz von Methan durch andere flüchtige Kohlenwasserstoffe auch andere Gruppen an das Silizium gehängt werden können.

Dies gelingt zum Beispiel auch, indem Ethen oder Ethin mit dem Tetrahalogensilan in dem Reaktor plasmaunterstützt zur Reaktion gebracht werden, wobei Vinyl- oder Ethinylhalogensilane und die Bis(silyl)alkane (X₃Si)₂CH₂, RX₂SiCH₂SiX₃ und (RSiX₂)₂CH₂ (R = Vinyl, Ethinyl) erhalten werden können.

Werden im Plasmareaktor anstelle des Tetrahalogensilans organosubstituierte Halogensilane RₙSiX₄₋ₙ (n=1-3) mit Kohlenwasserstoffen zur Reaktion gebracht, gelingt es, Produkte mit höherer Organosubstitution am Siliciumatom zu synthetisieren, bzw. deren Anteile am Reaktionsgemisch, ausgehend von Siliciumtetrahalogenid, zu erhöhen.

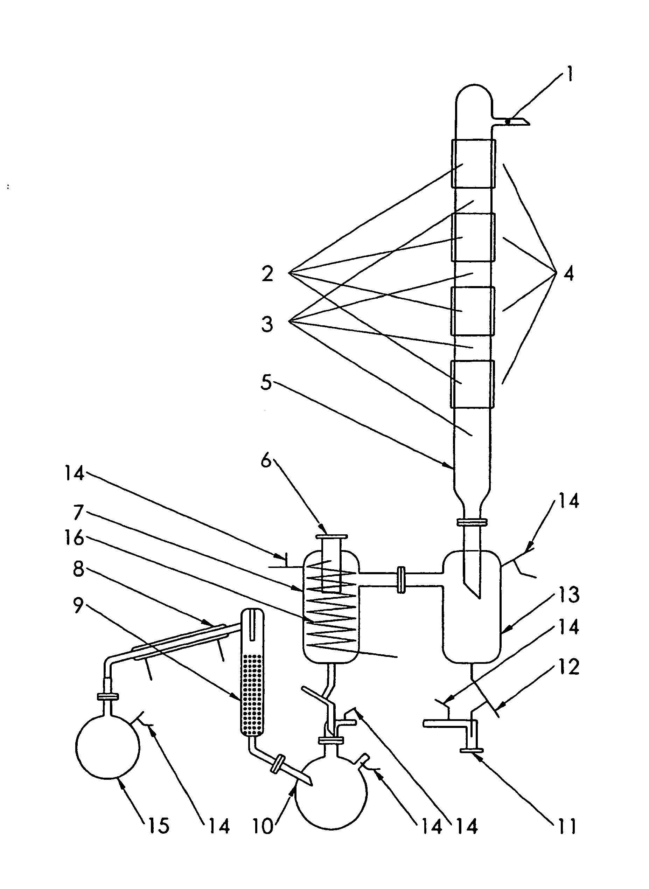

Das Verfahren zur plasmaunterstützen Organofunktionalisierung von SiX₄ oder Organohalogensilanen durchläuft mehrere Verfahrensschritte und sei am Beispiel von SiCl₄ anhand der Zeichnung wie folgt beschrieben:
1. Durch den Gaseinlass (1) werden CH₄ und SiCl₄ in den Reaktor (5) eingeleitet und
2. es wird unter reduziertem Druck (0,1 - 100hPa) durch Anlegen elektromagnetischer Wechselfelder ein Plasma gezündet.
3. Dabei kann der Reaktor mehrere Plasma- (2) und Ruhezonen (3) sowie gekühlte Flächen enthalten. Die Reaktionsgase durchströmen den Reaktor (5) zur Vakuumpumpe hin, wobei
4. die leichtflüchtigen Bestandteile (SiCl₄, MeSiCl₃, Me₂SiCl₂ etc.) durch Tiefkühlung (16) (z. B. bei -80° C mit Kryostat) in einem Auffanggefäß zurückgehalten werden.
5. Nach festgelegter Zeit wird die Reaktion beendet und das aufgefangene Silangemisch in ein Destillationsgefäß (10) abgelassen, wo es
6. durch fraktionierende Destillation in die Einzelkomponenten aufgetrennt werden kann. Dabei werden SiCl₄ (Edukt), MeSiCl₃ und Me₂SiCl₂ als farblose Flüssigkeiten erhalten.
7. Weiterhin werden im Reaktorbereich gelbe bis bräunliche Beläge von methylierten Oligo- und Polysilanen erhalten, welche
8. durch Lösen mit SiCl₄ in das Auffanggefäß für Polysilane (13) überführt werden.

Das Verfahren zur Methylierung von Tetrachlorsilan ist in der Zeichnung mit folgenden Bezugszeichen dargestellt:
1. Zuführstutzen Siliciumtetrachlorid und Methan
2. Plasmareaktionszone
3. Plasmaruhezone
4. Plamaelektroden
5. Plasmareaktionsgefäß
6. Stutzen zur Vakuumpumpe
7. Tiefkühlauffanggefäß
8. Kühler
9. Destillationskolonne
10. Destillationsgefäß
11. Bodenablassstutzen
12. Ablassventil
13. Auffanggefäß 1
14. Serviceventil für Schutzgasbeaufschlagung oder Vakuum
15. Auffanggefäß 2
16. Tiefkühlvorrichtung

### Ausführungsbeispiele

### 1. Allgemeine Vorgehensweise

SiCl₄ wird mit dem Reaktandgas (ca. 10-15 1 / min) in den Reaktor (5) eingedüst und das Plasma gezündet. Dabei kann das Volumenverhältnis SiCl₄ / Reaktandgas beliebig variiert werden, weitere Inertgas -oder Wasserstoffzumischungen sind möglich. Als Reaktandgase kommen auch Gasmischungen (z.B. Methan / Ethylen oder Methan / Wasserstoff) in unterschiedlichen Mischungsverhältnissen zum Einsatz. Das SiCl₄/Produktgemisch wird am Austritt aus dem Reaktor gesammelt und destillativ aufgearbeitet. Dabei werden die Produkte gemäß ihrer Siedepunkte isoliert und spektroskopisch identifiziert. In den hier beschriebenen Ausführungsbeispielen werden die Produkte vom SiCl₄ weitgehend befreit, wobei die Produktbildung je nach Bedingungen zwischen 25 und 60 % liegt. Die Produktmischung wird gaschromatografisch untersucht, die Identität einzelner Verbindungen wird durch einen Vergleich der Fragmentierungsmuster und der Retentionszeiten mit solchen authentischer Proben sichergestellt.

Die Produktbildung lässt sich unter den vorgegebenen Plasmabedingungen formal aus einer Kombination von Radikalreaktionen (z.B. SiC14 → Cl· + Cl₃Si· ; CH₄ → ·CH₃+H· ; Cl₃Si· + H· → Cl₃SiH; Cl₃Si· + ·Me → Cl₃SiMe) und Carbeneinschubreaktionen in Si-C und Si-Si-Bindungen (z.B. CH₄ → CH₂ + H₂; R₃SiCH₃ + |CH₂ → R₃SiCH₂CH₃; 2 Cl₃Si· → Cl₃Si-SiCl₃

|CH₂ → Cl₃Si-CH₂-SiCl₃ u.a. verstehen.

Erklärungen/Def.:
➢ Me = Methyl = -CH₃
➢ Vi = Vinyl = -CH=CH₂
➢ Et = Ethyl = -CH₂-CH₃

1. SiCl₄ in Gegenwart von Methan, CH₄:
   Me(H)SiCl₂ (3 %), MeSiCl₃ (8 %), Me₂SiCl₂ (5 %) Durch Zumischung von Wasserstoff (H₂) wird besonders der Anteil an Me(H)SiCl₂ erhöht:
   Me(H)SiCl₂ (18 %), MeSiCl₃ (17 %), Me₂SiCl₂ (12 %)
   Wird der Anteil an Methan deutlich verringert, wird Cl₃SiCH₂SiCl₃ in über 40 %igem Anteil gebildet, die Anteile an Me(H)SiCl₂ » MeSiCl₃ > Me₂SiCl₂ sind jetzt deutlich geringer.
   Wird anstelle von Methan, Ethan, C₂H₆, verwendet, erhöht sich der relative Anteil an Methylradikalen und Carbenen (CH₃ bzw. : |CH₂) im Reaktionsgemisch, wodurch sich der Anteil an methylierten Produkten und Carbosilanen erhöht:
   Cl₃SiCH₂CH₃ (2.8 %), ViSiCl₃ (25.49 %), MeViSiCl₂ (1.6 %), Cl₃SiCH₂SiCl₃ (53 %), ViCl₂SiCH₂SiCl₂Me (17.6 %), daneben entstehen geringe Mengen an Cl₃SiH, Me(H)SiCl₂, Cl₆Si₂.
2. SiCl₄ in Gegenwart von Ethen, C₂H₄
   HSiCl₃ (3 %), ViSiCl₃ (29 %), Cl₃Si-C ≡ CH (10.6 %), Vi₂SiCl₂ (2.4 %),
   ViEtSiCl₂ (12.7 %), Cl₃SiCH₂CH₂CH₃ (4.7 %), Cl₃SiCH₂SiCl₃ (38 %),
   Cl₃SiCH₂SiCl₂Vi (2.6 %). Wird nur wenig Ethen zugespeist, entstehen hauptsächlich chlorierte Kohlenwasserstoffe, Benzol, und an Silanen praktisch ausschließlich Cl₃SiCH₂SiCl₃ neben wenig ViSiCl₃. Wird dem Ethen weiteres Methan, CH₄, zugesetzt, werden folgende Produkte gebildet:
   HSiCl₃ (2 %), MeSiCl₃ (1 %), Me₂SiCl₂ (< 1 %), Cl₃SiC≡CH (3.4 %), Cl₃SiCH₂CH₃ (5.2 %), Cl₃SiCH=CH₂ (26 %), MeViSiCl₂ (0.6 %), EtSiCl₃ in Spuren, Cl₃SiCH₂CH=CH₂ (26 %), Cl₃SiCH₂CH₂CH₃ (1.5 %), Cl₂ViSi (C≡C-CH=CH₂)
   18 %), Cl₃SiCH₂SiCl₃ (18 %).
3. Durch Verwendung von Methyltrichlorsilan, MeSiCl₃, anstelle von SiCl₄, wird in Gegenwart von Methan der Anteil an Me₂SiCl₂ deutlich erhöht. Wird die Kombination MeSiCl₃ / Ethen eingesetzt, werden folgende Produkte isoliert: SiCl₄ (6.9 %), Me₂ViSiH (1.2 %), ViSiCl₃ (32.2 %), EtSiCl₃ (6.4 %), MeViSiCl₂ (31 %), Cl₃SiCH₂SiCl₃ (17.2 %), MeCl₂SiCH₂SiCl₃ (5.1 %). Die Kombination MeSiCl₃/CH≡CH (4-5 1/min) liefert als Produkte SiCl₄ (43.4 %), ViSiCl₃ (3.6 %), MeViSiCl₂ (6.8 %), Cl₃SiCH₂SiCl₃ (46.4 %).
4. Alternative Vorgehensweise mit reduzierten Gasflüssen (je 0,21/min): Ein Gemisch von CH₄ und SiCl₄ (1:1) wird über den Stutzen 1 bei einem Druck von 1 - 2 hPa in das Plasmareaktionsgefäß 5 geleitet und ein Plasma im Bereich der Plasmaelektroden (4) erzeugt. Daraufhin scheiden sich methylierte Chlorpolysilane im Plasmareaktionsgefäß 5 und im Auffanggefäß 13 ab. Die leichter flüchtigen Chlor- und Methylchlorsilane werden im Gefäß 7 kondensiert und in Gefäß 10 aufgefangen, während die gasförmigen Reaktionsprodukte über den Stutzen 6 abgezogen werden. Im Verlauf von 2,5h werden im Gefäß 10 181 g Produktmischung aufgefangen, welche über die Destillationskolonne 9 in die Einzelprodukte aufgetrennt wird. Dabei werden aus der Produktmischung 21,6 g MeSiCl₃ und 1,8 g Me₂SiCl₂ als farblose Flüssigkeiten erhalten. Die methylierten Chlorpolysilane werden durch Lösen in SiCl₄ aus dem Plasmareaktionsgefäß 5 in das Auffanggefäß 13 überführt und über den Bodenablassstutzen (11) entnommen.

## Patentansprüche

1. Verfahren zur plasmaunterstützten Synthese von Organohalogensilanen, **dadurch gekennzeichnet, dass** durch Zündung eines Plasmas in einem Gemisch aus einer oder mehreren flüchtigen organischen Verbindungen aus der Gruppe der Alkane, Alkene, Alkine und Aromaten mit SiX₄ und/oder Organohalogensilanen RₙSiX₄₋ₙ (X=F, Cl, Br oder I; n=1-4; R = Alkyl, Alkenyl, Alkinyl, Aryl) Organohalogensilane der allgemeinen Summenformel R¹ₘR²ₒSiX₄₋p (X=F, Cl, Br oder I; p=1-4; p=m+o; m=1-4; o=0-3; R¹, R² = Alkyl, Alkenyl, Alkinyl, Aryl) und/oder Carbosilane der allgemeinen Summenformel R³_{q}SiX_{3-q}CH₂SiR⁴ᵣX₃₋ᵣ (X=F, Cl, Br oder I; q=0-3; r=0-3; R³, R⁴ = Alkyl, Alkeny, Alkinyl, Aryl) gebildet werden.

2. Verfahren zur plasmaunterstützten Synthese von Organohalogensilanen gemäß Anspruch 1, **dadurch gekennzeichnet, dass** das Reaktandgemisch durch Anwendung eines nichtisothermen Plasmas zur Reaktion gebracht wird.

3. Verfahren zur plasmaunterstützten Synthese von Organohalogensilanen gemäß Anspruch 1 oder 2, **dadurch gekennzeichnet, dass** das Reaktandgemisch unter vermindertem Druck, insbesondere bei einem Druck von 0,1-100 hPa, vorzugsweise von 1,0-10,0 hPa, zur Reaktion gebracht wird.

4. Verfahren zur plasmaunterstützten Synthese von Organohalogensilanen gemäß einem der Ansprüche 1 bis 3, **dadurch gekennzeichnet, dass** das Reaktandgemisch durch mindestens eine Plasmareaktionszone, insbesondere durch mehrere Reaktions- und Ruhezonen, welche abwechselnd aufeinander folgen, geleitet wird.

5. Verfahren zur plasmaunterstützten Synthese von Organohalogensilanen gemäß einem der Ansprüche 1 bis 4, **dadurch gekennzeichnet, dass** das Reaktandgemisch in einem Plasmareaktor bei Reaktionstemperaturen von -80 °C bis +400 °C, vorzugsweise von 0 °C bis 250 °C, umgesetzt wird.

6. Verfahren zur plasmaunterstützten Synthese von Organohalogensilanen gemäß einem der Ansprüche 1 bis 5, **dadurch gekennzeichnet, dass** die Reaktionsprodukte in einem Auffanggefäß (7) nach dem Plasmareaktor durch Tiefkühlkondensatoren bei etwa -80 °C gewonnen werden.

7. Verfahren zur plasmaunterstützten Synthese von Organohalogensilanen gemäß einem der Ansprüche 1 bis 6, **dadurch gekennzeichnet, dass** die Organohalogensilane aus einem Destillationsgefäß (10) in einer Destillationskolonne (9) durch Destillation erhalten und in einem Auffanggefäß (15) aufgefangen werden.

8. Verfahren zur plasmaunterstützten Synthese von Organohalogensilanen nach einem der Ansprüche 1-7, **dadurch gekennzeichnet, dass** Methan allein oder zusätzlich zu Methan andere flüchtige Verbindungen aus der Gruppe der Aliphaten und/oder Aromaten, insbesondere Ethan, Ethen und/oder Ethin, eingesetzt werden.

9. Verfahren zur plasmaunterstützten Synthese von Organohalogensilanen nach einem der Ansprüche 1-8, **dadurch gekennzeichnet, dass** statt oder zusätzlich alkylierter Halogensilane arylierte Halogensilane erhalten werden, indem statt oder zusätzlich zu Alkanen Aromaten eingesetzt werden, alkenylierte Halogensilane erhalten werden, indem statt oder zusätzlich zu Alkanen Alkene eingesetzt werden, oder alkinylierte Halogensilane erhalten werden, indem statt oder zusätzlich zu Alkanen Alkine eingesetzt werden.

10. Verfahren zur plasmaunterstützten Synthese von Organohalogensilanen nach einem der Ansprüche 1-9, **dadurch gekennzeichnet, dass** Organohalogensilane mit unterschiedlichen Organylsubstituenten hergestellt werden.

11. Verfahren zur plasmaunterstützten Synthese von Organohalogensilanen nach einem der Ansprüche 1 bis 10, **dadurch gekennzeichnet, dass** eine oder mehrere flüchtige Verbindungen aus der Gruppe der Halogensilane oder Organohalogensilane, insbesondere SiF₄, SiCl₄, und/oder SiBr₄ und/oder Methyltrichlorsilan, umgesetzt werden.

12. Verfahren zur plasmaunterstützten Synthese von Organohalogensilanen nach einem der Ansprüche 1 bis 11, **dadurch gekennzeichnet, dass** die flüchtigen Verbindungen, vorzugsweise der Form MeSiX₃, durch eine Destillation der in dem Auffanggefäß (15) aufgefangenen Organohalogensilane gewonnen werden.

13. Verfahren zur plasmaunterstützten Synthese von Organohalogensilanen nach einem der Ansprüche 1-12, **dadurch gekennzeichnet, dass** zusätzlich Wasserstoff umgesetzt wird.

14. Verfahren zur plasmaunterstützten Synthese von Organohalogensilanen nach einem der Ansprüche 1 bis 13, **dadurch gekennzeichnet, dass** zweifach silyliertes Methan (Carbosilan), insbesondere ein Bis(silyl)methan X₃SiCH₂-SiX₃,hergestellt wird, ein Bis(silyl)methan H₃SiCH₂-SiH₃ und/oder ein silylorganyliertes und/oder ein silylhalogeniertes Derivat des Bis(silyl)methans hergestellt wird oder ein oder verschiedene organosubstituierte Bis(silyl)methane, insbesondere RX₂Si-CH₂-SiX₃ und/oder (RX₂Si)₂CH₂, wobei R insbesondere aus der Gruppe Vinyl und Ethinyl ausgewählt ist, hergestellt wird.

15. Verfahren zur plasmaunterstützten Synthese von Organohalogensilanen nach einem der Ansprüche 1 bis 14, **dadurch gekennzeichnet, dass** zusätzlich in dem Ausgangsgemisch ein oder verschiedene Organohalogensilane, insbesondere RₙSiX₄₋ₙ, wobei R insbesondere aus der Gruppe Vinyl und Ethinyl ausgewählt ist, als Edukt enthalten sind.

## Claims

1. A method for plasma-supported synthesis of organohalosilanes, **characterized in that** a plasma is ignited in a mixture of one or more volatile organic compounds from the group of alkanes, alkenes, alkynes and aromatics with SiX₄ and/or organohalosilanes RₙSiX₄₋ₙ (X = F, Cl, Br or I; n = 1-4; R = alkyl, alkenyl, alkynyl, aryl) to form organohalosilanes of the general chemical formula R¹ₘR²ₒSiX₄₋ₚ (X = F, Cl, Br or I; p = 1-4; p = m + o; m = 1-4; o = 0-3; R¹, R² = alkyl, alkenyl, alkynyl, aryl) and/or carbosilanes of the general chemical formula R³_{q}SiX_{3-q}CH₂SiR⁴ᵣX₃₋ᵣ (X = F, Cl, Br or I; q = 0-3; r = 0-3; R³, R⁴ - alkyl, alkenyl, alkynyl, aryl).

2. The method for plasma-supported synthesis of organohalosilanes according to Claim 1, **characterized in that** the reactant mixture is brought to reaction by using a nonisothermal plasma.

3. The method for plasma-supported synthesis of organohalosilanes according to Claim 1 or 2, **characterized in that** the reactant mixture is brought to reaction under reduced pressure, more particularly under a pressure of 0.1-100 hPa, preferably of 1.0-10.0 hPa.

4. The method for plasma-supported synthesis of organohalosilanes according to any of Claims 1 to 3, **characterized in that** the reactant mixture is passed through at least one plasma reaction zone, more particularly through a plurality of reaction zones and rest zones which follow one another alternately.

5. The method for plasma-supported synthesis of organohalosilanes according to any of Claims 1 to 4, **characterized in that** the reactant mixture is reacted in a plasma reactor at reaction temperatures of -80°C to +400°C, preferably of 0°C to 250°C.

6. The method for plasma-supported synthesis of organohalosilanes according to any of Claims 1 to 5, **characterized in that** the reaction products are recovered in a collecting vessel (7) downstream of the plasma reactor by low-temperature condensers at approximately -80°C.

7. The method for plasma-supported synthesis of organohalosilanes according to any of Claims 1 to 6, **characterized in that** the organohalosilanes are obtained from a distillation vessel (10) in a distillation column (9) by distillation and are collected in a collecting vessel (15).

8. The method for plasma-supported synthesis of organohalosilanes according to any of Claims 1-7, **characterized in that** methane alone or, in addition to methane, other volatile compounds from the group consisting of aliphatics and/or aromatics, more particularly ethane, ethene and/or ethyne, are used.

9. The method for plasma-supported synthesis of organohalosilanes according to any of Claims 1-8, **characterized in that**, instead of or in addition to alkylated halosilanes, arylated halosilanes are obtained by using aromatics instead of or in addition to alkanes, alkenylated halosilanes are obtained by using alkenes instead of or in addition to alkanes, or alkynylated halosilanes are obtained by using alkynes instead of or in addition to alkanes.

10. The method for plasma-supported synthesis of organohalosilanes according to any of Claims 1-9, **characterized in that** organohalosilanes with different organyl substituents are prepared.

11. The method for plasma-supported synthesis of organohalosilanes according to any of Claims 1 to 10, **characterized in that** one or more volatile compounds from the group consisting of halosilanes and organohalosilanes, more particularly SiF₄, SiCl₄ and/or SiBr₄ and/or methyltrichlorosilane, are reacted.

12. The method for plasma-supported synthesis of organohalosilanes according to any of Claims 1 to 11, **characterized in that** the volatile compounds, preferably of the form MeSiX₃, are obtained by distillation of the organohalosilanes collected in the collecting vessel (15).

13. The method for plasma-supported synthesis of organohalosilanes according to any of Claims 1-12, **characterized in that** hydrogen additionally is reacted.

14. The method for plasma-supported synthesis of organohalosilanes according to any of Claims 1 to 13, **characterized in that** twofold silylated methane (carbosilane), more particularly a bis(silyl)methane X₃Si-CH₂-SiX₃, is prepared, a bis(silyl)methane H₃Si-CH₂-SiH₃ and/or a silyl organylated and/or a silyl halogenated derivative of bis(silyl)methane is prepared or one or different organosubstituted bis(silyl)methanes, more particularly RX₂Si-CH₂-SiX₃ and/or (RX₂Si)₂CH₂, where R is selected more particularly from the group consisting of vinyl and ethynyl, are prepared.

15. The method for plasma-supported synthesis of organohalosilanes according to any of Claims 1 to 14, **characterized in that** the starting mixture additionally comprises, as starting materials, one or different organohalosilanes, more particularly RₙSiX₄₋ₙ, where R is selected more particularly from the group consisting of vinyl and ethynyl.

## Revendications

1. Procédé de synthèse assistée par plasma d'organohalogénosilanes, **caractérisé en ce que** des organohalogénosilanes de formule cumulée générale R¹ₘR²ₒSiX₄₋ₚ (X = F, Cl, Br ou I ; p = 1 à 4 ; p = m + o ; m = 1 à 4 ; o = 0 à 3 ; R¹, R² - alkyle, alcényle, alcynyle, aryle) et/ou des carbosilanes de formule cumulée générale R³_{q}SiX_{3-q}CH₂SiR⁴ᵣX₃₋ᵣ (X = F, Cl, Br ou I ; q = 0 à 3 ; r = 0 à 3 ; R³, R⁴ = alkyle, alcényle, alcynyle, aryle) sont formés par allumage d'un plasma dans un mélange d'un ou de plusieurs composés organiques volatils du groupe des alcanes, alcènes, alcynes et composés aromatiques avec SiX₄ et/ou des organohalogénosilanes RₙSiX₄₋ₙ (X = F, Cl, Br ou I ; n = 1 à 4 ; R = alkyle, alcényle, alcynyle, aryle).

2. Procédé de synthèse assistée par plasma d'organohalogénosilanes selon la revendication 1, **caractérisé en ce que** le mélange de réactifs est mis en réaction par application d'un plasma non isotherme.

3. Procédé de synthèse assistée par plasma d'organohalogénosilanes selon la revendication 1 ou 2, **caractérisé en ce que** le mélange de réactifs est mis en réaction sous pression réduite, en particulier à une pression de 0,1 à 100 hPa, de préférence de 1,0 à 10,0 hPa.

4. Procédé de synthèse assistée par plasma d'organohalogénosilanes selon l'une quelconque des revendications 1 à 3, **caractérisé en ce que** le mélange de réactifs est conduit au travers d'au moins une zone de réaction à plasma, en particulier au travers de plusieurs zone de réaction et de repos, qui se succèdent en alternance.

5. Procédé de synthèse assistée par plasma d'organohalogénosilanes selon l'une quelconque des revendications 1 à 4, **caractérisé en ce que** le mélange de réactifs est mis en réaction dans un réacteur à plasma à des températures de réaction de -80 °C à +400 °C, de préférence de 0 °C à 250 °C.

6. Procédé de synthèse assistée par plasma d'organohalogénosilanes selon l'une quelconque des revendications 1 à 5, **caractérisé en ce que** les produits de réaction sont obtenus dans un récipient de recueillement (7) après le réacteur à plasma par des condensateurs de réfrigération à environ -80 °C.

7. Procédé de synthèse assistée par plasma d'organohalogénosilanes selon l'une quelconque des revendications 1 à 6, **caractérisé en ce que** les organohalogénosilanes sont obtenus par distillation à partir d'un récipient de distillation (10) dans une colonne de distillation (9) et recueillis dans un récipient de recueillement (15).

8. Procédé de synthèse assistée par plasma d'organohalogénosilanes selon l'une quelconque des revendications 1 à 7, **caractérisé en ce que** le méthane seul ou, en plus du méthane, d'autres composés volatils du groupe des composés aliphatiques et/ou aromatiques, en particulier l'éthane, l'éthène et/ou l'éthyne, sont utilisés.

9. Procédé de synthèse assistée par plasma d'organohalogénosilanes selon l'une quelconque des revendications 1 à 8, **caractérisé en ce qu'**à la place ou en plus des halogénosilanes alkylés, des halogénosilanes arylés sont obtenus en utilisant des composés aromatiques à la place ou en plus des alcanes, des halogénosilanes alcénylés sont obtenus en utilisant des alcènes à la place ou en plus des alcanes, ou des halogénosilanes alcynylés sont obtenus en utilisant des alcynes à la place ou en plus des alcanes.

10. Procédé de synthèse assistée par plasma d'organohalogénosilanes selon l'une quelconque des revendications 1 à 9, **caractérisé en ce que** des organohalogénosilanes comprenant différents substituants organyle sont fabriqués.

11. Procédé de synthèse assistée par plasma d'organohalogénosilanes selon l'une quelconque des revendications 1 à 10, **caractérisé en ce qu'**un ou plusieurs composés volatils du groupe des halogénosilanes ou des organohalogénosilanes, en particulier SiF₄, SiCl₄ et/ou SiBr₄ et/ou le méthyltrichlorosilane, sont mis en réaction.

12. Procédé de synthèse assistée par plasma d'organohalogénosilanes selon l'une quelconque des revendications 1 à 11, **caractérisé en ce que** les composés volatils, de préférence de la forme MeSiX₃, sont obtenus par une distillation des organohalogénosilanes recueillis dans le récipient de recueillement (15).

13. Procédé de synthèse assistée par plasma d'organohalogénosilanes selon l'une quelconque des revendications 1 à 12, **caractérisé en ce que** de l'hydrogène est également mis en réaction.

14. Procédé de synthèse assistée par plasma d'organohalogénosilanes selon l'une quelconque des revendications 1 à 13, **caractérisé en ce que** du méthane deux fois silylé (carbosilane), en particulier un bis (silyl)méthane X₃Si-CH₂-SiX₃, est fabriqué, un bis(silyl)méthane H₃Si-CH₂-SiH₃ et/ou un dérivé silylorganylé et/ou silylhalogéné du bis(silyl)méthane est fabriqué, ou un ou divers bis(silyl)méthanes organosubstitués, en particulier RX₂Si-CH₂-SiX₃ et/ou (RX₂Si)₂CH₂, R étant en particulier choisi dans le groupe constitué par vinyle et éthynyle, sont fabriqués.

15. Procédé de synthèse assistée par plasma d'organohalogénosilanes selon l'une quelconque des revendications 1 à 14, **caractérisé en ce qu'**un ou divers organohalogénosilanes, en particulier RₙSiX₄₋ₙ, R étant en particulier choisi dans le groupe constitué par vinyle et éthynyle, sont également contenus en tant que réactif dans le mélange initial.
